# EUROPÄISCHE PATENTANMELDUNG

(11) **EP 1 892 402 A1**
(43) Veröffentlichungstag der Anmeldung: **27.02.2008**
(21) Anmeldenummer: 06119474.2
(22) Anmeldetag: 24.08.2006
(51) Int. Cl.: F02D 41/30

(54) **Verfahren und Vorrichtung zum Steuern des Einspritzsystems während des Übergangs von einem HCCI zu einem SI Verbrennungsmodus**

(71) Anmelder: Ford Global Technologies, LLC, Dearborn, MI 48126 (US)
(72) Erfinder: Marceno, Marco, 58093, Hagen (DE); Wojahn, Jens, 50733, Köln (DE); Grieser, Klemens, 40764, Langenfeld (DE)
(74) Vertreter: Drömer, Hans-Carsten

(57) **Zusammenfassung**

Die Erfindung betrifft ein Verfahren zum Überführen einer Hybrid-Brennkraftmaschine mit mindestens einem Zylinder (m ≥ 1) von einem ersten Betriebsmodus in einen zweiten Betriebsmodus, wobei die beiden Betriebsmodi durch den HCCI-Modus und den SI-Modus dargestellt werden.

## Beschreibung

Die Erfindung betrifft ein Verfahren zum Überführen einer Hybrid-Brennkraftmaschine mit mindestens einem Zylinder (m ≥ 1) von einem ersten Betriebsmodus in einen zweiten Betriebsmodus, wobei die beiden Betriebsmodi durch den HCCI-Modus (homogenous-charge compression-ignition) und den SI-Modus (spark ignition) dargestellt werden.

Des Weiteren betrifft die Erfindung eine Hybrid-Brennkraftmaschine mit mindestens einem Zylinder, die für einen Betrieb sowohl im HCCI-Modus als auch im SI-Modus geeignet und mit einer Motorsteuerung ausgestattet ist.

Unter SI-Verfahren sind im Rahmen der vorliegenden Erfindung sämtliche Brennverfahren zu verstehen, bei denen die Verbrennung mittels einer Zündvorrichtung, insbesondere einer Zündkerze, eingeleitet wird, bzw. alle Verfahren, die mit einer Fremdzündung arbeiten und bei denen diese Fremdzündung mittels einer Zündvorrichtung initiiert wird.

Das HCCI-Verfahren, das seinen Namen von der englischen Bezeichnung "homogenous-charge compression-ignition" erhalten hat, ist ein Brennverfahren zum Betreiben einer Brennkraftmaschine. Dieses Verfahren, das auch als CAI-Verfahren (Controlled Auto-Ignition) bezeichnet wird, basiert auf einer kontrollierten Selbstzündung des dem Zylinder zugeführten Kraftstoffes. Dabei wird der Kraftstoff - wie bei einem direkteinspritzenden Ottomotor - unter Luftüberschuß, also überstöchiometrisch, verbrannt.

Darüber hinaus führt das HCCI-Verfahren zu einem erhöhten thermischen Wirkungsgrad. Der Kraftstoff kann dabei sowohl direkt in die Zylinder als auch in das Ansaugrohr eingebracht werden, wobei eine Direkteinspritzung zusammen mit einem variablen Ventiltrieb gegebenenfalls eine Eliminierung der Drosselklappe und damit eine weitere Entdrosselung der Brennkraftmaschine gestattet.

Das HCCI-Verfahren und eine Brennkraftmaschine, die dieses Verfahren zur Verbrennung des Kraftstoffes verwendet, werden in der US 6,390,054 B1 beschrieben.

Nach dem Stand der Technik weist das HCCI-Verfahren mehrere Nachteile auf, die im wesentlichen dazu führen, daß dieses Verfahren nicht in sämtlichen Betriebspunkten einer Brennkraftmaschine eingesetzt werden kann, so daß sich die - oben beschriebenen - Vorteile nur in einem kleinen Bereich des Motorenkennfeldes (Last über Drehzahl) nutzen lassen. Dies ist auch der Grund dafür, daß nach dem Stand der Technik eine Brennkraftmaschine nicht ausschließlich nach dem HCCI-Verfahren betrieben werden kann, sondern grundsätzlich ein Hybridantrieb erforderlich ist, um die Brennkraftmaschine in den Betriebspunkten, in denen das HCCI-Verfahren versagt, trotzdem betreiben zu können.

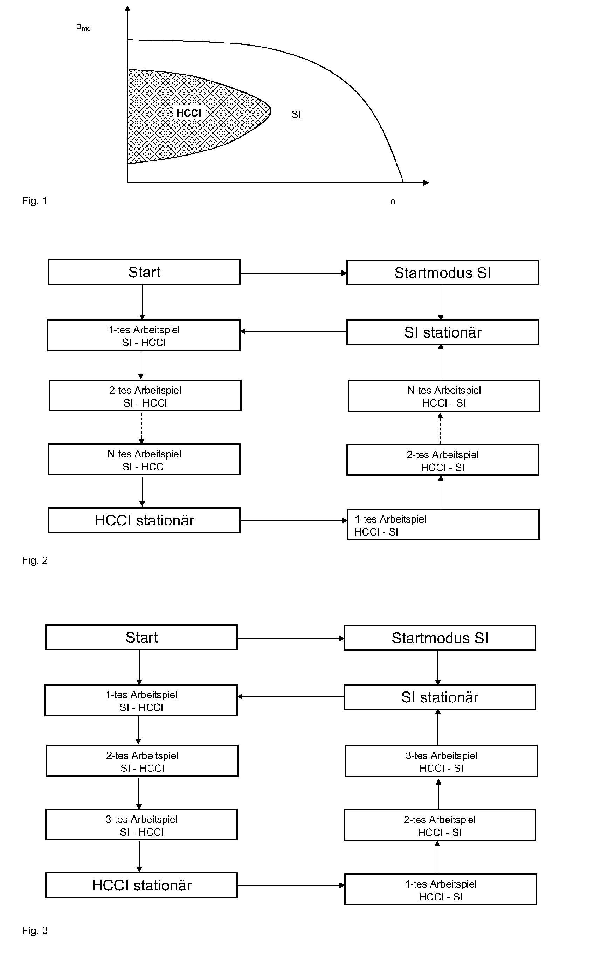

Figur 1 zeigt beispielhaft und schematisch das Motorenkennfeld einer Brennkraftmaschine, in das der Bereich, in dem das HCCI-Verfahren zur Anwendung kommen kann, eingezeichnet ist. Das HCCI-Verfahren kann danach nur bedingt bei hohen und niedrigen Lasten und mittleren bis hohen Drehzahlen eingesetzt werden. Die Gründe hierfür werden im folgenden kurz dargelegt.

Grundsätzlich ergeben sich bei der Anwendung des HCCI-Verfahrens Beschränkungen, die aus der Steuerung des Zündzeitpunktes der Selbstzündung und der Steuerung der Brenngeschwindigkeit d.h. des Brennverlaufs herrühren. Die Selbstzündung wird eingeleitet, wenn das Kraftstoff-Luftgemisch während der Verdichtung eine bestimmte Temperatur erreicht, wobei sich die Selbstzündung in Abhängigkeit von den die Zündung und Verbrennung beeinflussenden Parametern, beispielsweise der Last bzw. dem Sauerstoffüberschuß, zu jedem Zeitpunkt der Verdichtung ereignen kann.

Mit zunehmender Last wird die Selbstzündung infolge des abnehmenden Luftverhältnisses nach früh verschoben d.h. das Kraftstoff-Luftgemisch zündet in der Kompressionsphase zu einem früheren Zeitpunkt, wobei die Umsatzraten bzw. die Brenngeschwindigkeit ebenfalls zunehmen. Durch den frühen und nur schwer zu reproduzierenden Zündzeitpunkt und insbesondere durch die schnellere Brenngeschwindigkeit wird der Lauf der Brennkraftmaschine ungleichförmiger und härter, wobei letzteres vergleichbar ist mit dem für Dieselmotoren typischen Dieselnageln, das ebenfalls durch einen steilen Druckanstieg infolge der sprunghaft einsetzenden Verbrennung verursacht wird. Zudem sinkt infolge der weit vor dem oberen Totpunkt (OT) freigesetzten Verbrennungswärme der thermische Wirkungsgrad.

Wird hingegen die Last gesenkt, setzt infolge des mageren Betriebes die Selbstzündung später ein oder bleibt sogar ganz aus, so daß es zu einer unvollständigen Verbrennung oder zu Zündaussetzern und erhöhten Emissionen von unverbrannten Kohlenwasserstoffen und Kohlenmonoxid kommen kann. Insbesondere nach einem Kaltstart und im Leerlauf sind vermehrt Zündaussetzer zu beobachten, wobei es aufgrund der niedrigen Betriebstemperatur der Brennkraftmaschine bzw. der geringen Last nicht zu einer Selbstzündung des Kraftstoff-Luft-Gemisches kommt.

Mit zunehmender Drehzahl wird die Zeit, die zur Aufbereitung des Kraftstoff-LuftGemisches, insbesondere für chemische Vorreaktionen und die Homogenisierung, zur Verfügung gestellt wird, verkürzt, so daß es auch bei hohen Drehzahlen zu Zündaussetzern kommen kann, weil kein zündfähiges Kraftstoff-Luft-Gemisch generiert werden kann. Zudem wird - eine erfolgreiche Selbstzündung vorrausgesetzt - der Schwerpunkt der Verbrennung nach spät verschoben, so daß sich der thermische Wirkungsgrad des Verbrennungsprozesses verschlechtert.

Um das HCCI-Verfahren auch für die zuvor beschriebenen Szenarien tauglich zu machen und den Anwendungsbereich dieses Verfahrens zu erweitern, wurden nach dem Stand der Technik verschiedene Konzepte erarbeitet. Insbesondere wird versucht, durch verschiedene Maßnahmen auf die Temperatur der dem Zylinder zugeführten Frischladung Einfluß zu nehmen, beispielsweise durch die interne und/oder externe Rückführung von Abgas.

Trotz dieser Bemühungen ist es nach dem Stand der Technik immer noch nicht möglich, einen Ottomotor ausschließlich d.h. in sämtlichen Betriebspunkten des Motorenkennfeldes nach dem HCCI-Verfahren zu betreiben, so daß nach wie vor der Einsatz bzw. die Anwendung des SI-Verfahrens neben dem HCCI-Verfahren erforderlich bzw. unentbehrlich ist.

Insofern stellt sich die Aufgabe, eine derartige Brennkraftmaschine, die sowohl für einen Betrieb im HCCI-Modus als auch für einen Betrieb im SI-Modus geeignet und vorgesehen ist, bei einer gewissen Drehzahl bzw. einer bestimmten Last aus dem HCCI-Modus in den SI-Modus zu überführen und umgekehrt.

Das Überführen der Brennkraftmaschine von einem Betriebsmodus in den anderen Betriebsmodus ist auch Gegenstand der US 6,390,054 B1. Bei dem in der US 6,390,054 B1 beschriebenen Verfahren zur Steuerung einer Hybrid-Brennkraftmaschine der in Rede stehenden Art werden die einzelnen Zylinder der Brennkraftmaschine nicht gleichzeitig, sondern sequentiell d.h. nacheinander - zeitlich versetzt - aus dem HCCI-Modus in den SI-Modus überführt und umgekehrt. D. h. während des Überganges vom dem einen in den anderen Modus bzw. während der Überleitung der Zylinder in einen anderen Modus wird eine erste Gruppe von Zylindern im HCCI-Modus und eine zweite Gruppe von Zylindern im SI-Modus betrieben.

Neben dieser grundsätzlichen Vorgehensweise zum Überführen der Brennkraftmaschine offenbart die US 6,390,054 B1 aber keine Einzelheiten darüber, wie die Brennkraftmaschine bzw. die Zylinder beim Überführen in einen anderen Modus gesteuert werden bzw. zu steuern sind.

Ein Verfahren der in Rede stehenden Art sollte insbesondere ein Überführen der Brennkraftmaschine ermöglichen, ohne daß spürbare und nicht akzeptable Änderungen beim Drehmoment, der Drehzahl und/oder den Emissionen zu beobachten sind, die als Störung des Betriebs der Brennkraftmaschine anzusehen sind. Um ein robustes Verfahren zu realisieren, ist es nicht ausreichend, in einem konkreten Betriebspunkt der Brennkraftmaschine, beispielsweise gekennzeichnet durch Last und Drehzahl, von den Betriebsparametern des einen Modus auf die Betriebsparameter des anderen Modus zu wechseln.

Vor diesem Hintergrund ist es die Aufgabe der vorliegenden Erfindung, ein Verfahren zum Überführen einer Hybrid-Brennkraftmaschine gemäß dem Oberbegriff des Anspruches 1 aufzuzeigen, mit dem ein möglichst störungsfreier Wechsel des Betriebsmodus ermöglicht wird.

Eine weitere Teilaufgabe der vorliegenden Erfindung besteht darin, eine Brennkraftmaschine zur Durchführung eines derartigen Verfahrens bereitzustellen.

Gelöst wird die erste Teilaufgabe durch ein Verfahren zum Überführen einer Hybrid-Brennkraftmaschine mit mindestens einem Zylinder (m ≥ 1) von einem ersten Betriebsmodus in einen zweiten Betriebsmodus, wobei die beiden Betriebsmodi durch den HCCI-Modus und den SI-Modus dargestellt werden, und das dadurch gekennzeichnet ist, daß
■ die Brennkraftmaschine im Rahmen eines ersten Verfahrensschrittes und unter Beibehaltung des momentanen ersten Betriebsmodus in einen vorgebbaren Betriebspunkt, der durch mindestens zwei Betriebsparameter gekennzeichnet ist, überführt wird, und
■ zum Überführen der Brennkraftmaschine in den zweiten Betriebsmodus die Brennkraftmaschine im Rahmen eines zweiten Verfahrensschrittes kennfeldgesteuert wird in der Art, daß für N aufeinanderfolgende Arbeitsspiele mindestens zwei Steuergrößen für den Betrieb der Brennkraftmaschine sequentiell aus einem Satz von N Kennfeldern ausgelesen werden, wobei jedem Arbeitsspiel jeweils ein Kennfeld zugeordnet wird.

Gemäß dem erfindungsgemäßen Verfahren wird die Brennkraftmaschine während des Überführens in einen anderen Betriebsmodus unter Verwendung von N Kennfeldern für N aufeinanderfolgende Arbeitsspiele - entsprechend einer sogenannten Feedforward-Steuerung (open-loop) - gesteuert. Im Gegensatz zu einer sogenannten Feedback-Regelung (closedloop), bei der eine Rückmeldung vorgesehen ist und die Abweichung des Istwertes eines Betriebsparameters zu einem vorgegebenen Sollwert berücksichtigt wird und Einfluß auf die Steuergröße hat, ist die Feedforward-Steuerung dadurch gekennzeichnet, daß die aus den Kennfeldern ausgelesenen, fest vorgegebenen Steuergrößen unverändert d. h. unbeeinflußt vom tatsächlichen Betriebszustand der Brennkraftmaschine bleiben.

Gegenüber der Feedback-Regelung hat die Feedforward-Steuerung gleich mehrere Vorteile.

Zum einen entfallen mit der nicht vorgesehenen Rückmeldung die für eine Rückmeldung zwingend erforderlichen Sensoren, beispielsweise Sensoren zur Bestimmung bzw. Erfassung des Zylinderdrucks, und damit auch die mit der Sensorik verbundenen Kosten.

Zum anderen arbeitet eine Feedforward-Steuerung schneller als eine Feedback-Regelung, denn die N Kennfelder werden sequentiell ausgelesen, ohne daß auf die in den Kennfeldern abgelegten Steuergrößen von außen ergänzend Einfluß genommen wird, beispielsweise in der Weise, daß eine Steuergröße angepaßt wird in Abhängigkeit einer mittels Rückmeldung bereitgestellten Sollwertabweichung eines Betriebsparameters der Brennkraftmaschine von einem vorgegebenen Istwert.

Zwar führt die schnellere Feedforward-Steuerung in der Regel zu größeren Abweichungen des tatsächlich erreichten Ist-Zustandes vom angestrebten Soll-Zustand der Brennkraftmaschine, wohingegen die langsamere Feedback-Regelung aufgrund der Rückmeldung genauer arbeitet. Für den hier zu erzielenden Effekt, die Brennkraftmaschine möglichst schnell in einen anderen Modus zu überführen, ist die mit der Feedforward-Steuerung erzielbare Genauigkeit aber ausreichend. Eine schnelle Überführung der Brennkraftmaschine in den anderen Modus verbessert das instationäre Betriebsverhalten der Brennkraftmaschine erheblich.

Zudem muß berücksichtigt werden, daß die N Kennfelder speziell für einen konkreten vorgebbaren Betriebspunkt bereitgestellt werden, so daß die in den Kennfeldern abgelegten Steuergrößen zuvor mit der erforderlichen Genauigkeit - beispielsweise empirisch auf dem Motorenprüfstand - ermittelt werden können, was die grundsätzlich größere Ungenauigkeit einer Feedforward-Steuerung zumindest teilweise kompensiert.

Beim Betrieb einer Brennkraftmaschine können eine Vielzahl von Betriebsparametern verändert werden, beispielsweise der Einspritzzeitpunkt, die Einspritzdauer bzw. die Kraftstoffmenge, der Zündzeitpunkt, die Drosselklappenstellung, aber gegebenenfalls auch die Abgasrückführrate einer externen und/oder internen Abgasrückführung, der mittels Aufladung generierte Ladedruck und/oder die Temperatur der Zylinderfrischladung.

Die dazugehörigen Systeme der Brennkraftmaschine, nämlich Einspritzung, Zündung, Aufladung und/oder Abgasrückführung oder dergleichen, weisen ein unterschiedliches Ansprechverhalten auf, weshalb einige Betriebsparameter den vorgegebenen Sollwert schneller erreichen und andere Betriebsparameter vergleichsweise langsam, damit zeitversetzt und nicht korrespondierend zu den übrigen Betriebsparametern folgen.

So können der Einspritzzeitpunkt, die Einspritzdauer und der Zündzeitpunkt vergleichsweise verzögerungsfrei eingestellt werden, wohingegen die Abgasrückführung und die Aufladung eher träge auf vorgegebene Änderungen reagieren. Während einige Parameter ihren Sollwert relativ zügig annehmen, reagieren andere Parameter auf Veränderungen vergleichsweise langsam.

Daher ist bei der Überführung einer Brennkraftmaschine in einen anderen Modus mittels Feeback-Regelung grundsätzlich zu befürchten, daß die sich einstellenden Istwerte der Betriebsparameter nicht miteinander korrespondieren, da einige Parameter ihren Sollwert nahezu ohne Zeitverzug erreichen, während andere Parameter einige Arbeitsspiele benötigen, um sich ihrem Sollwert zu nähern. Erschwert wird dies zusätzlich dadurch, daß die verschiedenen Systeme nach dem Stand der Technik häufig miteinander in Verbindung stehen und auf diese Weise aufeinander Einfluß nehmen.

Bei dem Betriebspunkt, der im Rahmen des ersten Verfahrensschrittes vorgegeben und in welchen die Brennkraftmaschine in Vorbereitung auf einen Moduswechsel überführt wird, handelt es sich um einen Betriebspunkt der Brennkraftmaschine, der sich für eine Überführung der Brennkraftmaschine vom HCCI-Modus in den SI-Modus bzw. umgekehrt besonders eignet. Der erste Verfahrenschritt trägt damit dem Umstand Rechnung, daß die Brennkraftmaschine sich nicht aus jedem beliebigen Betriebspunkt im Motorenkennfeld gleich gut in einen anderen Modus überführen läßt.

So werden zum Zwecke eines Moduswechsels gemäß dem erfindungsgemäßen Verfahren bevorzugte Betriebspunkte angesteuert, bevor die eigentliche Überführung im Rahmen eines zweiten Verfahrenschrittes vorgenommen wird.

Die für einen Moduswechsel geeigneten Betriebspunkte sind motorenspezifisch und werden vorzugsweise auf einem Motorenprüfstand herausgefahren d. h. empirisch ermittelt.

Dadurch wird die erste der Erfindung zugrunde liegende Aufgabe gelöst, nämlich ein Verfahren zum Überführen einer Hybrid-Brennkraftmaschine gemäß dem Oberbegriff des Anspruches 1 aufzuzeigen, mit dem ein möglichst störungsfreier Wechsel des Betriebsmodus der Brennkraftmaschine ermöglicht wird.

Vorteilhafte Varianten des erfindungsgemäßen Verfahrens werden im Zusammenhang mit den Ausführungsformen gemäß den Unteransprüchen erörtert.

Vorteilhaft sind Ausführungsformen des Verfahrens, bei denen der vorgebbare Betriebspunkt aus einer Liste mit mindestens zwei unterschiedlichen vorgebbaren Betriebspunkten ausgewählt wird. Je mehr Betriebspunkte, die sich für einen Moduswechsel eignen, bereitgestellt werden d. h. in der Liste enthalten sind, desto weniger umfangreich fallen die durchzuführenden Änderungen der Betriebsparameter, beispielsweise des Mitteldrucks pₘₑ und der Drehzahl n, aus, die im Rahmen des ersten Verfahrensschrittes erforderlich sind, um die Brennkraftmaschine vom momentanen Betriebspunkt in den vorgebbaren bzw. vorgegebenen Betriebspunkt zu überführen. Vorteilhafterweise wird eine Vielzahl geeigneter Betriebspunkte entlang des Übergangsbereiches von HCCI-Modus und SI-Modus bereitgestellt (siehe auch Figur 1).

Vorteilhaft sind Ausführungsformen des Verfahrens, bei denen sowohl für den HCCI-Modus als auch für den SI-Modus als dem ersten Betriebsmodus eine Liste unterschiedlicher vorgebbarer Betriebspunkte bereitgestellt wird.

Diese Verfahrensvariante trägt dem Umstand Rechnung, daß sich die Betriebspunkte, die sich für einen Wechsel vom HCCI-Modus in den SI-Modus eignen, von den Betriebspunkten, die sich für einen Wechsel vom SI-Modus in den HCCI-Modus eignen, unterscheiden können und in der Regel auch unterscheiden. Daher kann es vorteilhaft sein, geeignete Betriebspunkte der Brennkraftmaschine im HCCI-Modus und geeignete Betriebspunkte im SI-Modus anzugeben bzw. bereitzustellen.

Vorteilhaft sind Ausführungsformen des Verfahrens, bei denen die mindestens zwei Betriebsparameter, die den vorgebbaren Betriebspunkt kennzeichnen, die Last und/oder die Drehzahl umfassen. Dabei kann die Last als Drehmoment oder aber als Mitteldruck pₘₑ angegeben werden.

Diese Verfahrensvariante ist vorteilhaft, weil nach dem Stand der Technik grundsätzlich die Drehzahl n der Brennkraftmaschine als einer der wichtigsten Betriebsparameter ermittelt wird, weshalb Informationen über die momentane Drehzahl n bereits vorliegen und vorteilhafterweise zur Definition eines Betriebspunktes genutzt werden können.

Nach dem Stand der Technik wird die Stellung der einzelnen Zylinder einer Brennkraftmaschine mittels Nockenwellensensor und/oder Kurbelwellensensor bestimmt. Der ortsfeste, an der Brennkraftmaschine angeordnete Kurbelwellensensor greift dabei Signale von einem Ring oder Zahnkranz ab, der mit der Kurbelwelle umläuft und beispielsweise am Schwungrad vorgesehen werden kann. Das vom Kurbelwellensensor erzeugte Signal wird von der Motorsteuerung zur Berechnung der Drehzahl und der Winkelstellung der Kurbelwelle verwendet. Diese Daten benötigt die Motorsteuerung beispielsweise für die Berechnung der Zündeinstellung, der Kraftstoffeinspritzung und der Kraftstoffmenge.

Der momentane effektive Mitteldruck pₘₑ wird in der Regel ebenfalls ermittelt, beispielsweise für die Laststeuerung bzw. eine Feedback-Regelung des indizierten Drehmomentes.

Die in Rede stehende Ausführungsform gewährleistet, daß keine zusätzliche Sensorik erforderlich ist, um den vorgebbaren Betriebspunkt eindeutig festzulegen, und daß die erforderlichen Betriebsparameter nicht mit zusätzlichem Aufwand ermittelt werden müssen. Es werden Parameter verwendet d.h. genutzt, die nach dem Stand der Technik zur Steuerung bzw. Regelung der Brennkraftmaschine bereits ermittelt wurden und somit bereits vorliegen.

Vorteilhaft sind Ausführungsformen des Verfahrens, bei denen für unterschiedliche vorgebbare Betriebspunkte unterschiedliche Sätze von Kennfeldern bereitgestellt werden, wobei der vorgebbare Betriebspunkt als Einganggröße verwendet wird, um einen Satz auszuwählen. Diese Verfahrensvariante trägt dem Umstand Rechnung, daß unterschiedliche Betriebspunkte in der Regel unterschiedliche, nämlich betriebspunktspezifische Steuergrößen und damit betriebspunktspezifische Kennfelder erfordern und zwar auch bei einem Moduswechsel.

Vorteilhaft sind Ausführungsformen des Verfahrens, bei denen die mindestens zwei aus einem Kennfeld auszulesenden Steuergrößen einen oder mehrere der folgenden Betriebsparameter umfassen:
■ Einspritzdauer
■ Einspritzzeitpunkt
■ Zündzeitpunkt
■ Drosselklappenstellung

Zusätzlich können die Kennfelder Steuergrößen betreffend einer eventuell vorhandenen Aufladung und/oder der Rückführrate einer Abgasrückführung enthalten. Werden mehrere Einspritzungen vorgenommen, beispielsweise in Form einer Voreinspritzung, Haupteinspritzung und/oder Nacheinspritzung, können auch mehrere Werte für die Steuergrößen "Einspritzdauer" und "Einspritzzeitpunkt" aus einem Kennfeld ausgelesen werden. Ebenso können die Kennfelder mehrere Werte für einen Zündzeitpunkt d.h. eine Vielzahl von Zündzeitpunkten enthalten.

An dieser Stelle sei angemerkt, daß die einzelnen Kennfelder eines Satzes von N Kennfeldern unterschiedliche Steuergrößen enthalten können und zwar sowohl nach der Anzahl als auch nach der Art.

Obwohl der HCCI-Modus grundsätzlich und prinzipbedingt durch eine Selbstzündung des Kraftstoff-Luftgemisches charakterisiert ist, kann es dennoch vorteilhaft sein, auch beim Übergang vom SI-Modus zum HCCI-Modus einen Zündzeitpunkt für die vorgesehene Zündeinrichtung in einem Kennfeld bereitzustellen und auszulesen.

Es kann nämlich auch im HCCI-Modus vorteilhaft und gewünscht sein, die Zündeinrichtung zu einem vorgegebenen Zündzeitpunkt zu aktivieren. Zum einen kann auf diese Weise in kritischen Betriebsbereichen eine Fremdzündung eingeleitet werden, um Zündaussetzer und Fehlzündungen zu unterbinden. In Grenzbereichen des HCCI-Verfahrens, in denen es nicht immer sichergestellt werden kann, daß der Kraftstoff sich selbstentzündet und vollständig verbrannt wird, wird das Gemisch zusätzlich mittels einer Zündvorrichtung fremdgezündet. Dadurch wird eine Verbrennung des Kraftstoffes gewährleistet. Die Emissionen an Kohlenmonoxid (CO) und unverbrannten Kohlenwasserstoffen (HC) werden reduziert und die Laufruhe der Brennkraftmaschine verbessert. Da jeder Zylinder der Brennkraftmaschine sowohl im HCCI-Modus als auch im SI-Modus betrieben werden kann, ist auch jeder Zylinder mit einer Zündeinrichtung, beispielsweise einer Zündkerze, ausgestattet, um das Kraftstoff-Luftgemisch im SI-Modus zu zünden.

Zum anderen kann die Zündeinrichtung auch zweckentfremdet werden in der Weise, daß diese nicht zur Einleitung einer Zündung verwendet wird, sondern zum Einbringen von Energie, beispielsweise in Gestalt eines Zündfunkens bzw. einer Funkenstrecke, die in Wärme umgewandelt wird, wodurch das im Zylinder befindliche Kraftstoff-Luftgemisch erwärmt d. h. die Temperatur der Zylinderfrischladung erhöht wird. Diese Temperaturerhöhung begünstigt die chemischen Vorreaktionen im Kraftstoff-Luftgemisch d. h. die Gemischaufbereitung und damit die Selbstzündung.

Aus den genannten Gründen wird die Zündvorrichtung im HCCI-Modus insbesondere im Leerlauf, nach einem Kaltstart und bei sehr niedrigen Lasten aktiviert; gegebenenfalls auch mehrmals.

Zum Überführen einer Hybrid-Brennkraftmaschine, die mit einem zumindest teilweise variablen Ventiltrieb ausgestattet ist, sind Ausführungsformen des Verfahrens vorteilhaft, bei denen die mindestens zwei aus einem Kennfeld auszulesenden Steuergrößen Steuersignale betreffend den Ventiltrieb umfassen.

Wie bereits in der Beschreibungseinleitung ausgeführt wurde, kann es zielführend sein, auf die Temperatur der Zylinderfrischladung Einfluß zu nehmen, um den Anwendungsbereich dieses Verfahrens zu erweitern oder die Selbstzündung des Kraftstoff-Luftgemisches zu beeinflussen bzw. sicherzustellen.

Die US 6,390,054 B1 schlägt vor, die Temperatur der Zylinderfrischladung mit zunehmender Last abzusenken, wodurch die Selbstzündung nach spät verschoben wird und die Brenngeschwindigkeit gesenkt werden kann, womit exakt den bei zunehmender Last beobachteten und oben beschriebenen Effekten entgegengewirkt wird. Eine Absenkung der Temperatur kann dabei beispielsweise durch die Rückführung gekühlten Abgases im Rahmen einer Abgasrückführung erfolgen oder aber durch die Absenkung des effektiven Verdichtungsverhältnisses, was durch spätes Schließen der Einlaßventile erreicht wird. Hierzu ist aber ein zumindest teilweise variabler Ventiltrieb erforderlich.

Für die Szenarien, in denen die Last gesenkt wird und/oder die Drehzahl erhöht wird, schlägt die US 6,390,054 B1 vor, die Temperatur der Zylinderfrischladung anzuheben und damit einerseits eine sichere Selbstzündung zu gewährleisten und diese Zündung nach früh zu verschieben. Damit wird den bei abnehmenden Lasten beobachteten Zündaussetzern entgegengewirkt. Bei hohen Drehzahlen können die Vorreaktionen früher einsetzen, so daß auch in diesen Betriebspunkten eine thermodynamisch effektive Verbrennung möglich wird. Die Emission von Kohlenmonoxid und unverbrannten Kohlenwasserstoffen wird reduziert.

Eine Erhöhung der Temperatur kann dabei beispielsweise durch die Rückführung heißen Abgases mittels einer internen und/oder externen Abgasrückführung erfolgen.

Zur externen Rückführung von Abgas weist die Brennkraftmaschine in der Regel mindestens eine Leitung auf, die aus dem Abgasabführsystem abzweigt und wieder in den Einlaßbereich mündet. Zusätzlich oder alternativ zu der externen Abgasrückführung besteht die Möglichkeit der internen Abgasrückführung d. h. Abgas intern zurückzuführen. Dabei wird das Abgas im Rahmen des Ladungswechsels bzw. Ausschiebetaktes nicht ausschließlich durch die Auslaßöffnungen der Zylinder in das Abgasabführsystem ausgeschoben und gegebenenfalls mittels einer Abgasrückführleitung wieder dem Einlaßbereich der Brennkraftmaschine extern zugeführt. Vielmehr wird ein Teil des Abgases beim Ladungswechsel in den mindestens einen Ansaugkanal der Brennkraftmaschine ausgeschoben, um beim nachfolgenden Ansaugen zusammen mit Frischgemisch bzw. Frischluft als Zylinderfrischladung wieder in den Zylinder zu gelangen, wo es an der nächsten Verbrennung teilnimmt.

Die interne Abgasrückführung läßt sich durch den Ladungswechsel steuern, wobei die Menge an intern rückgeführtem Abgas durch die den Ladungswechsel charakterisierenden Steuerzeiten bestimmt bzw. festgelegt wird. Die intern zurückgeführte Abgasmenge kann dabei beispielsweise durch eine Variation der Öffnungszeit des mindestens einen Einlaßventils eingestellt werden; gegebenenfalls unterstützt durch eine Verstellung der Schließzeit des mindestens einen Auslaßventils. Hierzu ist aber wiederum ein zumindest teilweise variabler Ventiltrieb erforderlich.

Eine Möglichkeit, die Steuerzeiten der Ventile zu variieren, besteht in der Verwendung einer Nockenwellenverstellvorrichtung, mit welcher die Einlaß- bzw. Auslaßnockenwelle gegenüber der Kurbelwelle um einen gewissen Winkel verdreht werden kann, so daß die Steuerzeiten nach früh oder spät verschoben werden.

Es können aber auch Nockenwellen verwendet werden, die eine Variation der Steuerzeiten durch den wechselnden Einsatz unterschiedlicher Nocken realisieren. Dabei sind auf der Nockenwelle unterschiedliche Nocken d. h. Nocken mit unterschiedlichen Nockenkonturen angeordnet, wobei durch Verschieben der Nockenwelle in Richtung der Nockenwellenlängsachse unterschiedliche Nocken zur Betätigung der Steuerorgane genutzt werden können. Die unterschiedlichen Konturen der Nocken führen zu unterschiedlichen Steuerzeiten.

Die vorteilhafteste Variante besteht in einer voll variablen Ventilsteuerung, die für jeden beliebigen Betriebspunkt der Brennkraftmaschine speziell abgestimmte Werte für den Hub und die Steuerzeiten der Steuerorgane bzw. Ventile zuläßt. Im Gegensatz zu konventionellen Ventiltrieben, bei denen sowohl der Hub der Ventile als auch die Steuerzeiten, d.h. die Öffnungs- und Schließzeiten der Einlaß- und Auslaßventile, bedingt durch die nicht flexible, da nicht verstellbare Mechanik des Ventiltriebes als unveränderliche Größen vorgegeben sind, können diese den Verbrennungsprozeß und damit den Kraftstoffverbrauch beeinflussenden Parameter mittels variabler Ventiltriebe mehr oder weniger stark variiert werden. Beim Ottomotor ist ein variabler Ventiltrieb zudem eine geeignete Maßnahme zur Entdrosselung des Arbeitsverfahrens.

Vorteilhaft sind Ausführungsformen des Verfahrens, bei denen für jeden Zylinder ein unterschiedlicher Satz von Kennfeldern verwendet wird. Bei dieser Verfahrensvariante werden die einzelnen Zylinder der Brennkraftmaschine zylinderspezifisch d. h. individuell gesteuert, so daß berücksichtigt werden kann, ob sich ein Zylinder momentan - d. h. zum Zeitpunkt der Einleitung des Moduswechsel - in der Kompressionsphase, der Expansionsphase, im Ansaugtakt oder im Ausschiebetakt befindet.

Vorteilhaft sind Ausführungsformen des Verfahrens, bei denen der Kraftstoff direkt eingespritzt wird. Die Direkteinspritzung des Kraftstoffes bietet entscheidende Vorteile bei der Gemischaufbereitung, wobei zusammen mit einer variablen Ventilsteuerung eine Entdrosselung der Brennkraftmaschine realisiert werden kann, was insbesondere im Teillastbereich die Ladungswechselverluste reduziert und den thermischen Wirkungsgrad des Prozesses anhebt. Eine Drosselklappe zur Quantitätsregelung der den Zylindern zugeführten Frischladung kann entfallen, falls die zugeführte Frischluft mittels einer variablen Ventilsteuerung gesteuert wird.

Grundsätzlich kann im Rahmen des HCCI-Verfahrens aber auch eine Quantitätsregelung mittels Drosselklappe erfolgen und der Kraftstoff in das Ansaugrohr eingespritzt werden.

Die zweite der Erfindung zugrundeliegende Teilaufgabe wird gelöst durch eine Hybrid-Brennkraftmaschine mit mindestens einem Zylinder, insbesondere zur Durchführung eines Verfahrens nach einem der vorherigen Ansprüche, die für einen Betrieb sowohl im HCCI-Modus als auch im SI-Modus geeignet und mit einer Motorsteuerung ausgestattet ist, und die
dadurch gekennzeichnet ist, daß die Motorsteuerung in der Art angepaßt ist, daß ein Betriebsmoduswechsel der Brennkraftmaschine kennfeldgesteuert durchführbar ist, wozu eine Liste mit mindestens zwei unterschiedlichen vorgebbaren Betriebspunkten und für jeden vorgebbaren Betriebspunkt ein Satz von Kennfeldern in der Motorsteuerung hinterlegt ist.

Das bereits für das erfindungsgemäße Verfahren Gesagte gilt auch für die erfindungsgemäße Brennkraftmaschine. Entsprechend den unterschiedlichen Verfahrensvarianten sind auch unterschiedliche Ausführungsformen der erfindungsgemäßen Brennkraftmaschine erforderlich bzw. zielführend, wozu auf die entsprechenden Verfahrensmerkmale Bezug genommen wird.

Im folgenden wird die Erfindung anhand von zwei Ausführungsbeispielen gemäß den Figuren 1 bis 3 näher beschrieben. Hierbei zeigt:
- Fig. 1: schematisch das Motorenkennfeld einer Hybrid-Brennkraftmaschine, in dem der Anwendungsbereich des HCCI-Verfahrens und des SI-Verfahrens gekennzeichnet ist,
- Fig. 2: schematisch eine erste Verfahrensvariante in Gestalt eines Flußdiagramms, und
- Fig. 3: schematisch eine konkrete Ausführungsform der in Figur 2 dargestellten ersten Verfahrensvariante in Gestalt eines Flußdiagramms.

Figur 1 wurde bereits im Zusammenhang mit dem Stand der Technik beschrieben.
Figur 2 zeigt schematisch eine erste Verfahrensvariante in Gestalt eines Flußdiagramms.

Wird das Verfahren zum Überführen der Hybrid-Brennkraftmaschine gestartet, hängt die weitere Vorgehensweise vom momentanen Betriebszustand der Brennkraftmaschine ab.

Ist die Brennkraftmaschine auf Betriebstemperatur und bereits in einem Betriebspunkt, der sich für die Überführung der Brennkraftmaschine vom SI-Modus in den HCCI-Modus eignet, kann der erste Verfahrensschritt, in dessen Rahmen die Brennkraftmaschine unter Beibehaltung des momentanen Betriebsmodus in einen vorgebbaren geeigneten Betriebspunkt überführt werden soll, entfallen.

Zum Überführen der Brennkraftmaschine in den zweiten Betriebsmodus wird die Brennkraftmaschine dann im Rahmen eines zweiten Verfahrensschrittes kennfeldgesteuert. Dabei werden die für den Betrieb der Brennkraftmaschine erforderlichen Steuergrößen für N aufeinanderfolgende Arbeitsspiele sequentiell aus einem Satz von N Kennfeldern ausgelesen. Jeweils ein Kennfeld dient zur Durchführung eines Arbeitsspiels.

Ausgehend von einem stationären Betrieb der Brennkraftmaschine im SI-Modus wird die Brennkraftmaschine innerhalb von N Arbeitsspielen in einen stationären HCCI-Modus überführt.

Nach einem Kaltstart wird die Brennkraftmaschine vorliegend ausschließlich im SI-Modus betrieben, weshalb der SI-Modus auch als Startmodus bezeichnet wird.

Nach einem Kaltstart ist die Überführung der Brennkraftmaschine in den HCCI-Modus nicht möglich, weshalb bei Einleitung des Verfahrens, falls die Hybrid-Brennkraftmaschine noch kalt ist, die Brennkraftmaschine im Rahmen einer Warmlaufphase zunächst im SI-Modus betrieben wird, bevor in Vorbereitung auf einen Moduswechsel ein stationärer vorgebbarer SI-Betriebspunkt angesteuert wird, der sich für eine Überführung in den HCCI-Modus besonders eignet. Die weitere Vorgehensweise entspricht der zuvor Beschriebenen.

Ausgehend von einem stationären HCCI-Betriebspunkt, der sich für eine Überführung in den SI-Modus besonders eignet, kann die Brennkraftmaschine auch in N Arbeitsspielen wieder in einen stationären SI-Betriebspunkt überführt werden. Die Vorgehensweise ist die bereits oben Beschriebene.

Figur 3 zeigt schematisch eine konkrete Ausführungsform der in Figur 2 dargestellten ersten Verfahrensvariante in Gestalt eines Flußdiagramms. Die dargestellte Verfahrensvariante ist dadurch gekennzeichnet, daß die Brennkraftmaschine für N = 3 aufeinanderfolgende Arbeitsspiele kennfeldgesteuert wird, wobei die für den Betrieb der Brennkraftmaschine erforderlichen Steuergrößen aus einem Satz von drei Kennfeldern (N = 3) ausgelesen werden.

Vorliegend werden sowohl für einen Übergang in den HCCI-Modus als auch für einen Übergang in den SI-Modus drei Arbeitspiele (N = 3) durchlaufen d. h. drei Kennfelder benötigt, wobei grundsätzlich auch unterschiedlich viele Kennfelder für die beiden möglichen Wechsel verwendet werden können.

### Bezugszeichen

- HCCI: homogenous-charge compression-ignition
- m: Anzahl der Zylinder
- n: Drehzahl der Brennkraftmaschine
- N: Anzahl der Kennfelder, Anzahl der Arbeitsspiele
- pₘₑ: effektiver Mitteldruck
- SI: spark ignition

## Patentansprüche

1. Verfahren zum Überführen einer Hybrid-Brennkraftmaschine mit mindestens einem Zylinder (m ≥ 1) von einem ersten Betriebsmodus in einen zweiten Betriebsmodus, wobei die beiden Betriebsmodi durch den HCCI-Modus (homogenous-charge compression-ignition) und den SI-Modus (spark ignition) dargestellt werden, **dadurch gekennzeichnet, daß**
■ die Brennkraftmaschine im Rahmen eines ersten Verfahrensschrittes und unter Beibehaltung des momentanen ersten Betriebsmodus in einen vorgebbaren Betriebspunkt, der durch mindestens zwei Betriebsparameter **gekennzeichnet** ist, überführt wird, und
■ zum Überführen der Brennkraftmaschine in den zweiten Betriebsmodus die Brennkraftmaschine im Rahmen eines zweiten Verfahrensschrittes kennfeldgesteuert wird in der Art, daß für N aufeinanderfolgende Arbeitsspiele mindestens zwei Steuergrößen für den Betrieb der Brennkraftmaschine sequentiell aus einem Satz von N Kennfeldern ausgelesen werden, wobei jedem Arbeitsspiel jeweils ein Kennfeld zugeordnet wird.

2. Verfahren nach Anspruch 1, **dadurch gekennzeichnet, daß** der vorgebbare Betriebspunkt aus einer Liste mit mindestens zwei unterschiedlichen vorgebbaren Betriebspunkten ausgewählt wird.

3. Verfahren nach Anspruch 2, **dadurch gekennzeichnet, daß** sowohl für den HCCI-Modus als auch für den SI-Modus als dem ersten Betriebsmodus eine Liste unterschiedlicher vorgebbarer Betriebspunkte bereitgestellt wird.

4. Verfahren nach einem der vorherigen Ansprüche, **dadurch gekennzeichnet, daß** die mindestens zwei Betriebsparameter, die den vorgebbaren Betriebspunkt kennzeichnen, die Last und/oder die Drehzahl umfassen.

5. Verfahren nach einem der Ansprüche 2 bis 4, **dadurch gekennzeichnet, daß** für unterschiedliche vorgebbare Betriebspunkte unterschiedliche Sätze von Kennfeldern bereitgestellt werden, wobei der vorgebbare Betriebspunkt als Einganggröße verwendet wird, um einen Satz auszuwählen.

6. Verfahren nach einem der vorherigen Ansprüche, **dadurch gekennzeichnet, daß** die mindestens zwei aus einem Kennfeld auszulesenden Steuergrößen einen oder mehrere der folgenden Betriebsparameter umfassen:
■ Einspritzdauer
■ Einspritzzeitpunkt
■ Zündzeitpunkt
■ Drosselklappenstellung

7. Verfahren nach einem der vorherigen Ansprüche zum Überführen einer Hybrid-Brennkraftmaschine, die mit einem zumindest teilweise variablen Ventiltrieb ausgestattet ist, **dadurch gekennzeichnet, daß** die mindestens zwei aus einem Kennfeld auszulesenden Steuergrößen Steuersignale betreffend den Ventiltrieb umfassen.

8. Verfahren nach einem der vorherigen Ansprüche zum Überführen einer Hybrid-Brennkraftmaschine mit mindestens zwei Zylindern, **dadurch gekennzeichnet, daß** für jeden Zylinder ein unterschiedlicher Satz von Kennfeldern verwendet wird.

9. Hybrid-Brennkraftmaschine mit mindestens einem Zylinder, insbesondere zur Durchführung eines Verfahrens nach einem der vorherigen Ansprüche, die für einen Betrieb sowohl im HCCI-Modus (homogenous-charge compression-ignition) als auch im SI-Modus (spark ignition) geeignet und mit einer Motorsteuerung ausgestattet ist,
**dadurch gekennzeichnet, daß**
■ die Motorsteuerung in der Art angepaßt ist, daß ein Betriebsmoduswechsel der Brennkraftmaschine kennfeldgesteuert durchführbar ist, wozu eine Liste mit mindestens zwei unterschiedlichen vorgebbaren Betriebspunkten und für jeden vorgebbaren Betriebspunkt ein Satz von Kennfeldern in der Motorsteuerung hinterlegt ist.

## Geänderte Patentansprüche

### Geänderte Patentansprüche gemäss Regel 137(2) EPÜ.

**1.** Verfahren zum Überführen einer Hybrid-Brennkraftmaschine mit mindestens einem Zylinder (m ≥ 1) von einem ersten Betriebsmodus in einen zweiten Betriebsmodus, wobei die beiden Betriebsmodi durch den HCCI-Modus (homogenous-charge compression-ignition) und den SI-Modus (spark ignition) dargestellt werden, **dadurch gekennzeichnet, daß**
■ die Brennkraftmaschine im Rahmen eines ersten Verfahrensschrittes und unter Beibehaltung des momentanen ersten Betriebsmodus in einen vorgebbaren Betriebspunkt, der durch mindestens zwei Betriebsparameter **gekennzeichnet** ist, die die Last und/oder die Drehzahl umfassen, überführt wird, und
■ zum Überführen der Brennkraftmaschine in den zweiten Betriebsmodus die Brennkraftmaschine im Rahmen eines zweiten Verfahrensschrittes kennfeldgesteuert wird in der Art, daß für N aufeinanderfolgende Arbeitsspiele mindestens zwei Steuergrößen für den Betrieb der Brennkraftmaschine sequentiell aus einem Satz von N Kennfeldern ausgelesen werden, wobei jedem Arbeitsspiel jeweils ein Kennfeld zugeordnet wird.

**2.** Verfahren nach Anspruch 1, **dadurch gekennzeichnet, daß** der vorgebbare Betriebspunkt aus einer Liste mit mindestens zwei unterschiedlichen vorgebbaren Betriebspunkten ausgewählt wird.

**3.** Verfahren nach Anspruch 2, **dadurch gekennzeichnet, daß** sowohl für den HCCI-Modus als auch für den SI-Modus als dem ersten Betriebsmodus eine Liste unterschiedlicher vorgebbarer Betriebspunkte bereitgestellt wird.

**4.** Verfahren nach einem der Ansprüche 2 bis 3, **dadurch gekennzeichnet, daß** für unterschiedliche vorgebbare Betriebspunkte unterschiedliche Sätze von Kennfeldern bereitgestellt werden, wobei der vorgebbare Betriebspunkt als Einganggröße verwendet wird, um einen Satz auszuwählen.

**5.** Verfahren nach einem der vorherigen Ansprüche, **dadurch gekennzeichnet, daß** die mindestens zwei aus einem Kennfeld auszulesenden Steuergrößen einen oder mehrere der folgenden Betriebsparameter umfassen:
■ Einspritzdauer
■ Einspritzzeitpunkt
■ Zündzeitpunkt
■ Drosselklappenstellung

**6.** Verfahren nach einem der vorherigen Ansprüche zum Überführen einer Hybrid-Brennkraftmaschine, die mit einem zumindest teilweise variablen Ventiltrieb ausgestattet ist, **dadurch gekennzeichnet, daß** die mindestens zwei aus einem Kennfeld auszulesenden Steuergrößen Steuersignale betreffend den Ventiltrieb umfassen.

**7.** Verfahren nach einem der vorherigen Ansprüche zum Überführen einer Hybrid-Brennkraftmaschine mit mindestens zwei Zylindern, **dadurch gekennzeichnet, daß** für jeden Zylinder ein unterschiedlicher Satz von Kennfeldern verwendet wird.

**8.** Hybrid-Brennkraftmaschine mit mindestens einem Zylinder, insbesondere zur Durchführung eines Verfahrens nach einem der vorherigen Ansprüche, die für einen Betrieb sowohl im HCCI-Modus (homogenous-charge compression-ignition) als auch im SI-Modus (spark ignition) geeignet und mit einer Motorsteuerung ausgestattet ist,
**dadurch gekennzeichnet, daß**
■ die Motorsteuerung in der Art angepaßt ist, daß ein Betriebsmoduswechsel der Brennkraftmaschine kennfeldgesteuert durchführbar ist, wozu eine Liste mit mindestens zwei unterschiedlichen vorgebbaren Betriebspunkten und für jeden vorgebbaren Betriebspunkt ein Satz von Kennfeldern in der Motorsteuerung hinterlegt ist.
